# FASCICULE DE BREVET EUROPEEN

(11) **EP 3 990 352 B1**
(45) Date de publication et mention de la délivrance du brevet: **26.04.2023**
(21) Numéro de dépôt: 20730431.2
(22) Date de dépôt: 09.06.2020
(51) Int. Cl.: B64D 27/26, B64D 27/18, B64C 3/32, B64C 3/18

(54) **ENSEMBLE POUR UN AÉRONEF, LEDIT ENSEMBLE COMPORTANT UN MAT ET UNE AILE**
ANORDNUNG FÜR EIN FLUGZEUG, WOBEI DIE ANORDNUNG EINEN MAST UND EINEN FLÜGEL UMFASST
ASSEMBLY FOR AN AIRCRAFT, THE ASSEMBLY COMPRISING A MAST AND A WING

(30) Priorité: 26.06.2019 FR 1906923
(43) Date de publication de la demande: 04.05.2022
(73) Titulaire: AIRBUS OPERATIONS (S.A.S.), 31060 Toulouse (FR)
(72) Inventeur: PAUTIS, Olivier, 31060 Toulouse Cedex 9 (FR); BERJOT, Michael, 31060 Toulouse Cedex 9 (FR)
(74) Mandataire: Sarraméa, Claude
(86) Numéro de dépôt international: PCT/EP2020/065963
(87) Numéro de publication internationale: WO 2020/260010

(56) Documents cités:
- EP-A1- 3 498 609
- WO-A1-2018/192787

## Description

La présente invention concerne un ensemble pour un aéronef, ledit ensemble comportant un mât et une aile, ainsi qu'un aéronef comportant au moins un tel ensemble.

Un aéronef comporte classiquement un fuselage et de chaque côté de ce dernier, un ensemble constitué d'une aile et d'un mât fixé sous l'aile pour y attacher un réacteur.

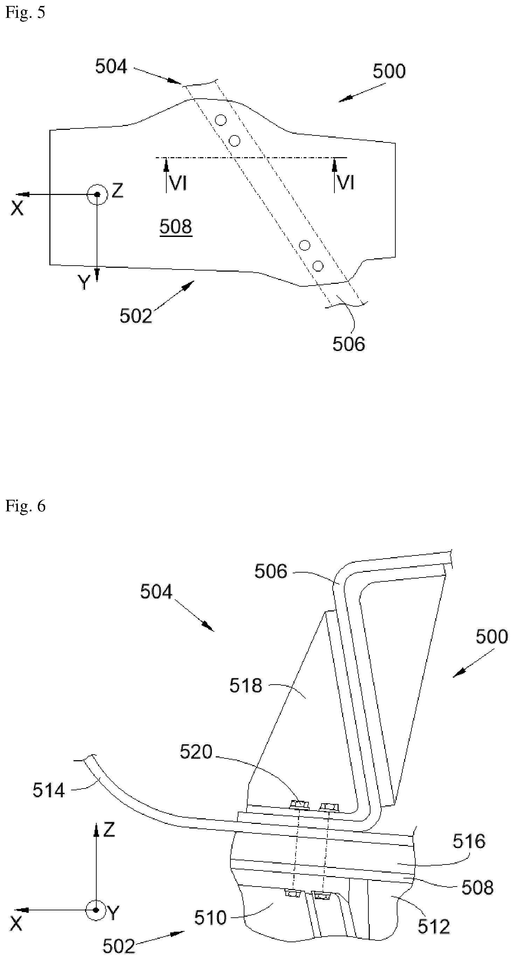

La Fig. 5 montre une vue de dessus d'un ensemble 500 de l'état de la technique, par exemple tel que décrit dans le document EP3498609, et la Fig. 6 montre une vue de côté et en coupe selon la ligne VI-VI de la Fig. 5.

Sur la Fig.5, l'aile 504 est représentée par l'empreinte de son longeron avant 506 qui s'étend le long du bord d'attaque de l'aile 504.

Le mât 502 comporte en particulier un longeron supérieur 508 et des pelles latérales 510 qui sont fixées contre des panneaux latéraux 512 sous le longeron supérieur 508.

L'aile 504 comporte une peau 514 qui forme la surface aérodynamique de l'aile 504 et le longeron avant 506 s'étend le long du bord d'attaque de l'aile 504 à l'intérieur de la peau 514. Dans le mode de réalisation présenté ici, l'ensemble 500 comporte également une pièce intercalaire 516 qui se positionne entre la peau 514 et le longeron supérieur 508.

L'aile 504 comporte également ici une équerre 518 qui se positionne en avant du longeron avant 506.

L'ensemble 500 comporte également une pluralité de boulons de fixation 520 qui prennent en sandwich l'équerre 518, le longeron avant 506, le longeron supérieur 508 et une pelle latérale 510 afin de fixer le mât 502 à l'aile 504.

Si un tel ensemble est satisfaisant du point de vue du fonctionnement, les boulons de fixation 520 sont tous positionnés en porte-à-faux à l'avant du longeron avant 506 ce qui génère un moment de torsion important dans le longeron avant 506, et il est alors nécessaire d'ajouter des ferrures de reprise à l'avant et à l'arrière pour compenser ce moment de torsion avec des conséquences en poids et en coût.

En outre, les fixations les plus en avant créent un important bras de levier avec le longeron avant 506. Ces moments de torsion sont encore accrus en cas de rupture d'un boulon de fixation arrière et le diamètre des boulons de fixation doit alors être augmenté pour compenser. Il est donc nécessaire de trouver un arrangement particulier qui permet de limiter le moment de torsion et donc le poids qui est ajouté pour renforcer mécaniquement les éléments dudit ensemble.

Un objet de la présente invention est de proposer un ensemble pour un aéronef qui comporte une aile et un mât fixé à l'aile et dont la structure permet de limiter le moment de torsion au niveau du longeron avant de l'aile.

A cet effet, est proposé un ensemble pour un aéronef tel que revendiqué dans la revendication 1.

Un tel ensemble permet de distribuer les boulons de fixation de part et d'autre du longeron avant et donc de supprimer le moment de torsion dans ledit longeron avant.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue de côté d'un aéronef comportant un ensemble selon l'invention,
- la figure 2 est une vue de dessus d'un ensemble selon l'invention,
- la figure 3 est une vue de côté et en coupe selon la ligne III-III de la Fig. 2,
- la figure 4 est une vue en coupe selon la ligne IV-IV de la Fig. 3,
- la figure 5 est une vue de dessus d'un ensemble de l'état de la technique, et
- la figure 6 est une vue de côté et en coupe selon la ligne VI-VI de la Fig. 3.

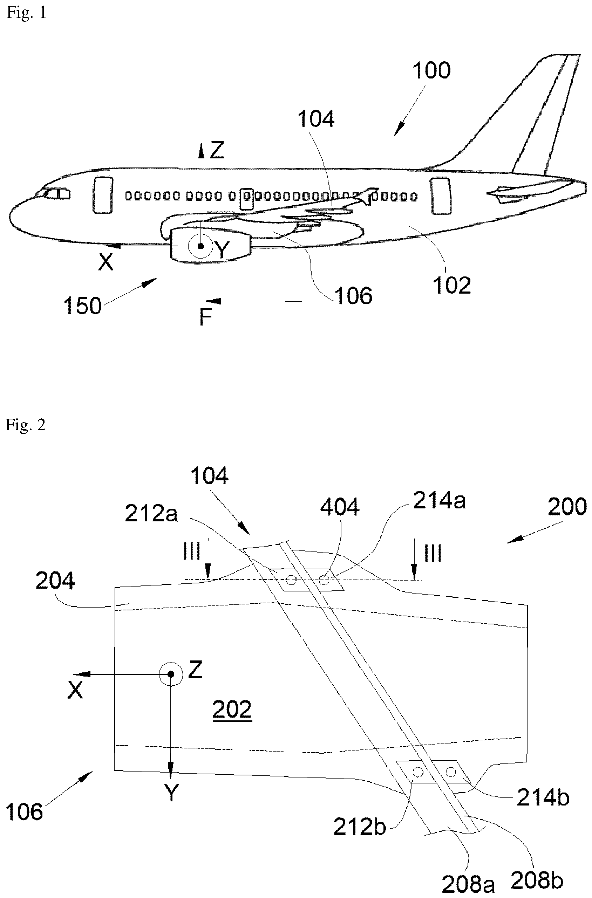

En référence avec la figure 1, un aéronef 100 comporte un fuselage 102 de chaque côté duquel est fixée une aile 104 qui porte au moins un réacteur 150, en particulier un turboréacteur double flux. La fixation du réacteur 150 sous l'aile 104 s'effectue par l'intermédiaire d'un mât 106.

Dans la description qui suit, et par convention, on appelle X la direction longitudinale du réacteur 150 et orientée positivement vers l'avant de l'aéronef 100, on appelle Y la direction transversale qui est horizontale lorsque l'aéronef est au sol, et Z la direction verticale, ces trois directions X, Y et Z étant orthogonales entre elles.

D'autre part, les termes " avant " et " arrière " sont à considérer par rapport à une direction d'avancement de l'aéronef 100 lors du fonctionnement du réacteur 150, cette direction étant représentée schématiquement par la flèche F sur la Fig. 1.

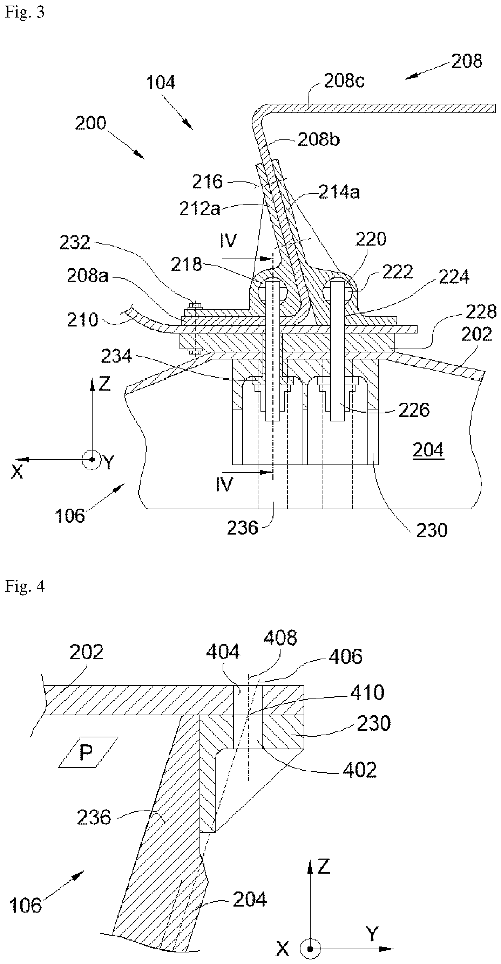

La Fig. 2 montre un ensemble 200 selon l'invention en vue de dessus et la Fig. 3 montre l'ensemble 200 en coupe.

L'ensemble 200 comporte le mât 106 qui comporte un longeron supérieur 202,un panneau latéral bâbord 204 et un panneau latéral tribord 204 vus en pointillés sur la Fig. 2 car ils sont sous le longeron supérieur 202. Les panneaux latéraux 204 s'étendent globalement verticalement de part et d'autre du longeron supérieur 202. La Fig. 4 montre une coupe d'un panneau latéral 204 et du longeron supérieur 202. Chaque pelle latérale 230 présente une surface de contact avec le longeron supérieur 202.

L'ensemble 200 comporte également l'aile 104 qui comporte une peau 210 qui forme la surface aérodynamique de l'aile 104 et un longeron avant 208 qui s'étend le long du bord d'attaque de l'aile 104 à l'intérieur de la peau 210.

Le longeron avant 208 présente un pli avant 208a, un pli intermédiaire 208b et un pli arrière 208c et présente ici un profil en Z.

Le pli intermédiaire 208b s'étend entre un bord inférieur et un bord supérieur au-dessus du bord inférieur et ici dans un plan globalement vertical.

Le pli avant 208a présente une extrémité proximale qui est solidaire du bord inférieur du pli intermédiaire 208b et une extrémité distale qui s'étend vers l'avant par rapport à l'extrémité proximale du pli avant 208a.

Le pli arrière 208c présente une extrémité proximale qui est solidaire du bord supérieur du pli intermédiaire 208b et une extrémité distale qui s'étend vers l'arrière par rapport à l'extrémité proximale du pli arrière 208c.

La Fig. 2 montre le positionnement du longeron avant 208 par rapport au longeron supérieur 202 sans la peau 210.

Le mât 106 et plus particulièrement le longeron supérieur 202 se positionne contre la peau 210. Dans le mode de réalisation de l'invention présenté à la Fig. 3, l'aile 104 présente une pièce intercalaire 228 qui se positionne entre la peau 210 et le longeron supérieur 202, afin d'avoir une interface plan-plan avec le longeron supérieur 202.

Le mât 106 comporte également ici deux pelles latérales 230, chacune étant fixée à l'extérieur contre un panneau latéral 204 sous le longeron supérieur 202 par exemple par l'intermédiaire de boulons.

L'aile 104 comporte une équerre avant tribord 212a et une équerre avant bâbord 212b et chacune se positionne en avant du pli intermédiaire 208b contre le pli avant 208a et le pli intermédiaire 208b.

L'aile comporte également une équerre arrière tribord 214a et une équerre arrière bâbord 214b, et chacune se positionne en arrière du pli intermédiaire 208b contre le pli intermédiaire 208b et la peau 210.

Chaque équerre avant 212a-b se positionne en face d'une équerre arrière 214a-b, de part et d'autre du pli intermédiaire 208b et prennent ainsi le pli intermédiaire 208b en sandwich. Chaque équerre 212a-b, 214a-b est fixée audit pli intermédiaire 208b par exemple par des vis de serrage 216.

Le pli avant 208a, la peau 210 et la pièce intercalaire 228 sont pris en sandwich entre le longeron supérieur 202 et les équerres avant 212a-b. La peau 210 et la pièce intercalaire 228 sont prises en sandwich entre le longeron supérieur 202 et les équerres arrière 214a-b.

Chaque équerre avant 212a-b présente un logement avant 218 et chaque équerre arrière 214a-b présente un logement arrière 220.

Chaque logement 218, 220 se positionne à la verticale d'une des pelles 230.

Chaque logement avant 218 et arrière 220 permet la mise en place d'un écrou 222 et chaque équerre 212, 214 est percée d'un alésage débouchant 224 qui débouche dans ledit logement 218, 220 et s'étend vers le mât 106, ici chaque alésage débouchant 224 s'étend verticalement.

Pour chaque logement avant 218, chacun parmi le pli avant 208a, la peau 210, la pièce intercalaire 228, le longeron supérieur 202 et la pelle latérale 230 associée, est percé d'un alésage coaxial avec l'alésage débouchant 224 correspondant au logement avant 218.

Pour chaque logement arrière 220, chacun parmi la peau 210, la pièce intercalaire 228, le longeron supérieur 202 et la pelle latérale 230 associée, est percé d'un alésage coaxial avec l'alésage débouchant 224 correspondant au logement arrière 220.

Cet alignement des alésages coaxiaux avec l'alésage débouchant 224 permet la mise en place d'une vis 226 qui présente une tête et une tige filetée, dont la tige filetée traverse successivement l'alésage 402 de la pelle latérale 230, l'alésage 404 du longeron supérieur 202, l'alésage de la pièce intercalaire 228, l'alésage de la peau 210 et l'alésage débouchant 224 pour se visser dans l'écrou 222, tandis que la tête vient s'appuyer contre la pelle latérale 230. Chaque vis 226 et l'écrou 222 associé forment un boulon de fixation.

Dans le mode de réalisation de l'invention, il y a donc deux boulons de fixation 222, 226 en avant du pli intermédiaire 208b et deux boulons de fixation 222, 226 en arrière du pli intermédiaire 208b et cette répartition permet la suppression du moment de torsion dans le longeron avant 208 de l'aile 104.

En outre la répartition des boulons de fixation 222, 226, l'un derrière l'autre par rapport à la direction longitudinale X facilite l'accès pour le serrage et le desserrage par l'extérieur du mât 106 sans qu'il soit nécessaire d'accéder à l'intérieur de la peau 210 ou du mât 106.

En outre, en cas de rupture d'un des boulons de fixation, la distance maximale entre deux boulons extrêmes reste identique et le diamètre des boulons de fixation peut être réduit par rapport au diamètre des boulons de fixation de l'état de la technique.

La pièce intercalaire 228 est fixée à la peau 210, au pli avant 208a et à chaque équerre avant 212a-b par la mise en place de boulons de serrage 232 dont un seul est représenté sur la Fig. 3. Chaque boulon de serrage 232 traverse un alésage qui traverse la peau 210, le pli avant 208a et chaque équerre avant 212a-b. D'autres moyens de fixation peuvent être prévus à l'arrière de la pièce intercalaire 228.

Au niveau de chaque équerre avant 212a-b, l'ensemble 200 est équipé d'un pion de cisaillement 234 qui prend la forme d'un cylindre dans lequel s'emmanche la tige filetée du boulon de fixation correspondant à ladite équerre avant 212a-b et qui s'étend à travers l'alésage 402 de la pelle latérale 230 et l'alésage de la pièce intercalaire 228 en traversant l'alésage 404 du longeron supérieur 202. Ces pions de cisaillement 234 transmettent les efforts du mât 106 à la pièce intercalaire 228 et ces efforts sont alors transmis à l'aile 104 par l'intermédiaire des boulons de serrage 232.

La Fig. 4 montre une coupe au niveau d'un plan milieu d'un raidisseur 236 du panneau latéral 204. Le raidisseur 236 et le panneau latéral 204 forment une unique pièce constituant ainsi un panneau intégré auto-raidi.

Les raidisseurs 236 sont à l'intérieur du mât 106 et sont vus en pointillés sur la Fig. 3 et la face intérieure du panneau latéral 204 est vue en pointillés sur la Fig. 4. La description qui est faite ci-dessous concerne le boulon de fixation correspondant à l'équerre avant bâbord 212b mais elle est également valable pour le boulon de fixation correspondant à l'équerre avant tribord 212a et chaque équerre arrière 214a-b. Bien sûr, le panneau latéral 204 peut présenter d'autres raidisseurs répartis sur sa longueur.

Le plan milieu du raidisseur 236 est matérialisé par le plan P de 1a Fig. 4 qui correspond ici au plan de la feuille.

Le plan milieu du panneau latéral 204 est le plan passant par la droite 406 et perpendiculaire au plan de la feuille.

L'axe de l'alésage débouchant 224, et donc du boulon de fixation est matérialisé par la ligne référencée 408 sur la Fig. 4.

L'intersection entre le plan milieu P du raidisseur 236 et le plan milieu du panneau latéral 204 est la droite 406.

La surface de contact entre le longeron supérieur 202 et la pelle latérale 230 coupe l'axe 408 de l'alésage débouchant 224 au niveau d'un point d'intersection 410 et ce point d'intersection 410 appartient à la droite 406.

Une telle installation permet de supprimer le moment de flexion dans le panneau latéral 204 en alignant les boulons de fixation et le plan milieu P du raidisseur 236 et le plan milieu du panneau latéral 204.

Ainsi d'une manière générale, pour chaque alésage débouchant 224 d'une équerre tribord 212a, 214a, le panneau latéral tribord 204 présente un raidisseur 236 et pour chaque alésage débouchant 224 d'une équerre bâbord 212b, 214b, le panneau latéral bâbord 204 présente un raidisseur 236. Chaque panneau latéral 204 présente un plan milieu 406, et chaque raidisseur 236 présente un plan milieu P. L'intersection entre le plan milieu 406 de chaque panneau latéral 204 et le plan milieu P de chaque raidisseur 236 associé est la droite 406 et la surface de contact entre le longeron supérieur 202 et la pelle latérale 230 coupe l'axe 408 de chaque alésage débouchant 224 au niveau d'un point d'intersection 410 où le point d'intersection 410 appartient à la droite 406 correspondant audit alésage débouchant 224.

Dans le mode de réalisation de l'invention présenté sur les Figs. 3 et 4, les pelles latérales 230 sont des éléments supplémentaires aux panneaux latéraux 204, mais elles pourraient être partie intégrante des panneaux latéraux 204.

## Revendications

1. Ensemble (200) pour un aéronef (100), ledit ensemble (200) comportant :
- un mât (106) comportant un longeron supérieur (202), un panneau latéral tribord (204) et un panneau latéral bâbord (204) qui s'étendent verticalement de part et d'autre du longeron supérieur (202) et deux pelles latérales (230), chacune étant fixée à l'extérieur contre un panneau latéral (204) et présentant une surface de contact avec le longeron supérieur (202),
- une aile (104) comportant une peau (210), un longeron avant (208) s'étendant à l'intérieur de la peau (210), une équerre avant tribord (212a), une équerre avant bâbord (212b), où chaque équerre avant (212a-b) présente un logement avant (218), où pour chaque logement avant (218), l'équerre avant (212) associée est percée d'un alésage débouchant (224) qui débouche dans ledit logement (218),
où le longeron avant (208) présente un pli avant (208a), un pli intermédiaire (208b) et un pli arrière (208c), où le pli avant (208a) présente une extrémité proximale solidaire d'un bord inférieur du pli intermédiaire (208b) et une extrémité distale qui s'étend vers l'avant par rapport à l'extrémité proximale, et où le pli arrière (208c) présente une extrémité proximale solidaire d'un bord supérieur du pli intermédiaire (208b) et une extrémité distale qui s'étend vers l'arrière par rapport à l'extrémité proximale,
où chaque équerre avant (212a-b) se positionne en avant du pli intermédiaire (208b) contre le pli avant (208a) et le pli intermédiaire (208b), et où chaque équerre avant (212a-b) est fixée audit pli intermédiaire (208b),
où pour chaque logement avant (218), chacun parmi le pli avant (208a), la peau (210), le longeron supérieur (202) et la pelle latérale (230) associée, est percé d'un alésage coaxial avec l'alésage débouchant (224) correspondant au logement avant (218),
**caractérisé en ce que** l'aile (104) comprend en outre une équerre arrière tribord (214a) et une équerre arrière bâbord (214b), où chaque équerre arrière (214a-b) présente un logement arrière (220), et où chaque équerre arrière (214a-b) se positionne en arrière du pli intermédiaire (208b) contre le pli intermédiaire (208b) et la peau (210), et où chaque équerre arrière (214a-b) est fixée audit pli intermédiaire (208b),
où pour chaque logement arrière (220), l'équerre arrière (214) associée est percée d'un alésage débouchant (224) qui débouche dans ledit logement (220),
où pour chaque logement arrière (220), chacun parmi la peau (210), le longeron supérieur (202) et la pelle latérale (230) associée, est percé d'un alésage coaxial avec l'alésage débouchant (224) correspondant au logement arrière (220), et
où pour chacun des logements avant et arrière (218, 220), l'ensemble (200) comporte en outre un boulon de fixation comportant un écrou (222) logé dans ledit logement (218, 220), et une vis (226) dont la tige filetée traverse les alésages coaxiaux et l'alésage débouchant (224) et se visse dans l'écrou (222) et dont la tête s'appuie contre la pelle latérale (230).

2. Ensemble (200) selon la revendication 1, **caractérisé en ce que** l'aile (104) comporte une pièce intercalaire (228) qui se positionne entre la peau (210) et le longeron supérieur (202) et **en ce que** la pièce intercalaire (228) est fixée à la peau (210), au pli avant (208a) et à chaque équerre avant (212a-b) par la mise en place de boulons de serrage (232).

3. Ensemble (200) selon la revendication 2, **caractérisé en ce qu'**au niveau de chaque équerre avant (212a-b), l'ensemble (200) est équipé d'un pion de cisaillement (234) qui prend la forme d'un cylindre dans lequel s'emmanche la tige filetée du boulon de fixation correspondant à ladite équerre avant (212a-b) et qui s'étend à travers un alésage (402) de la pelle latérale (230) et un alésage de la pièce intercalaire (228) en traversant un alésage du longeron supérieur (202).

4. Ensemble (200) selon l'une des revendications 1 à 3, **caractérisé en ce que** pour chaque alésage débouchant (224) d'une équerre tribord (212a, 214a), le panneau latéral tribord (204) présente un raidisseur (236) et pour chaque alésage débouchant (224) d'une équerre bâbord (212b, 214b), le panneau latéral bâbord (204) présente un raidisseur (236), **en ce que** chaque panneau latéral (204) présente un plan milieu (406), **en ce que** chaque raidisseur (236) présente un plan milieu (P), **en ce que** l'intersection entre le plan milieu (406) de chaque panneau latéral (204) et le plan milieu (P) de chaque raidisseur (236) associé est une droite (406), **en ce que** la surface de contact entre le longeron supérieur (202) et la pelle latérale (230) coupe l'axe (408) de chaque alésage débouchant (224) au niveau d'un point d'intersection (410), et **en ce que** chaque point d'intersection (410) appartient à la droite (406) correspondant audit alésage débouchant (224).

5. Aéronef (100) comportant au moins un ensemble selon l'une des revendications 1 à 4.

## Patentansprüche

1. Anordnung (200) für ein Luftfahrzeug (100), wobei die Anordnung (200) Folgendes umfasst:
- einen Mast (106) mit einem oberen Längsträger (202), einer Steuerbordseitenwand (204) und einer Backbordseitenwand (204), die sich vertikal auf beiden Seiten des oberen Längsträgers (202) erstrecken, und zwei Seitenschaufeln (230), die jeweils außen an einer Seitenwand (204) befestigt sind und eine Fläche aufweisen, die mit dem oberen Längsträger (202) in Kontakt steht,
- einen Flügel (104) mit einer Haut (210), einem vorderen Längsträger (208), der sich innerhalb der Haut (210) erstreckt, einem vorderen Steuerbordwinkel (212a) und einem vorderen Backbordwinkel (212b), wobei jeder vordere Winkel (212a - b) eine vordere Aufnahme (218) aufweist, wobei bei jeder vorderen Aufnahme (218) der zugehörige vordere Winkel (212) mit einer Durchgangsbohrung (224) versehen ist, die in die Aufnahme (218) mündet,
wobei der vordere Längsträger (208) einen vorderen Falz (208a), einen mittleren Falz (208b) und einen hinteren Falz (208c) aufweist, wobei der vordere Falz (208a) ein proximales Ende, das fest mit einer unteren Kante des mittleren Falzes (208b) verbunden ist, und ein distales Ende, das sich in Bezug auf das proximale Ende nach vorn erstreckt, aufweist und wobei der hintere Falz (208c) ein proximales Ende, das fest mit einer obere Kante des mittleren Falzes (208b) verbunden ist, und ein distales Ende, das sich in Bezug auf das proximale Ende nach hinten erstreckt, aufweist,
wobei jeder vordere Winkel (212a - b) vor dem mittleren Falz (208b) gegen den vorderen Falz (208a) und den mittleren Falz (208b) positioniert ist und wobei jeder vordere Winkel (212a - b) am mittleren Falz (208b) befestigt ist,
wobei bei jeder vorderen Aufnahme (218) sowohl der vordere Falz (208a) als auch die Haut (210) als auch der obere Längsträger (202) als auch die zugehörige seitliche Schaufel (230) mit einer Bohrung versehen sind, die koaxial mit der Durchgangsbohrung (224) ist, die der vorderen Aufnahme (218) entspricht,
**dadurch gekennzeichnet, dass** der Flügel (104) ferner einen hinteren Steuerbordwinkel (214a) und einen hinteren Backbordwinkel (214b) umfasst, wobei jeder hintere Winkel (214a - b) eine hintere Aufnahme (220) aufweist und wobei jeder hintere Winkel (214a - b) hinter dem mittleren Falz (208b) gegen den mittleren Falz (208b) und die Haut (210) positioniert ist und wobei jeder hintere Winkel (214a - b) am mittleren Falz (208b) befestigt ist,
wobei bei jeder hinteren Aufnahme (220) der zugehörige hintere Winkel (214) mit einer Durchgangsbohrung (224) versehen ist, die in die Aufnahme (220) mündet,
wobei bei jeder hinteren Aufnahme (220) sowohl die Haut (210) als auch der obere Längsträger (202) als auch die zugehörige seitliche Schaufel (230) mit einer Bohrung versehen sind, die koaxial mit der Durchgangsbohrung (224) ist, die der hinteren Aufnahme (220) entspricht, und
wobei die Anordnung (200) sowohl bei der vorderen als auch bei der hinteren Aufnahme (218, 220) außerdem einen Befestigungsbolzen aufweist, mit einer Mutter (222), die in der Aufnahme (218, 220) angeordnet ist, und einer Schraube (226), deren Gewindeschaft durch die koaxialen Bohrungen und die Durchgangsbohrung (224) verläuft und in die Mutter (222) geschraubt wird und deren Kopf an der seitlichen Schaufel (230) anliegt.

2. Anordnung (200) nach Anspruch 1, **dadurch gekennzeichnet, dass** der Flügel (104) ein Zwischenstück (228) aufweist, das zwischen der Haut (210) und dem oberen Längsträger (202) positioniert ist, und dass das Zwischenstück (228) durch die Anordnung von Spannbolzen (232) an der Haut (210), am vorderen Falz (208a) und an jedem vorderen Winkel (212a - b) befestigt ist.

3. Anordnung (200) nach Anspruch 2, **dadurch gekennzeichnet, dass** die Anordnung (200) an jedem vorderen Winkel (212a - b) mit einem Scherstift (234) ausgestattet ist, der die Form eines Zylinders aufweist, in den der Gewindeschaft des Befestigungsbolzens eingeführt wird, der dem vorderen Winkel (212a - b) entspricht und der sich durch eine Bohrung (402) der seitlichen Schaufel (230) und eine Bohrung des Zwischenstücks (228) erstreckt und dabei durch eine Bohrung des oberen Längsträgers (202) verläuft.

4. Anordnung (200) nach einem der Ansprüche 1 bis 3, **dadurch gekennzeichnet, dass** bei jeder Durchgangsbohrung (224) eines Steuerbordwinkels (212a, 214a) die Steuerbordseitenwand (204) eine Versteifung (236) aufweist und bei jeder Durchgangsbohrung (224) eines Backbordwinkels (212b, 214b) die Backbordseitenwand (204) eine Versteifung (236) aufweist, dass jede Seitenwand (204) eine Mittelebene (406) aufweist, dass jede Versteifung (236) eine Mittelebene (P) aufweist, dass die Schnittstelle zwischen der Mittelebene (406) jeder Seitenwand (204) und der Mittelebene (P) jeder zugehörigen Versteifung (236) eine Gerade (406) ist, dass die Kontaktfläche zwischen dem oberen Längsträger (202) und der seitlichen Schaufel (230) die Achse (408) jeder Durchgangsbohrung (224) an einem Schnittpunkt (410) schneidet und dass jeder Schnittpunkt (410) zu der Geraden (406) gehört, die der Durchgangsbohrung (224) entspricht.

5. Luftfahrzeug (100) mit mindestens einer Anordnung nach einem der Ansprüche 1 bis 4.

## Claims

1. Assembly (200) for an aircraft (100), said assembly (200) having:
- a pylon (106) having an upper spar (202), a starboard-side lateral panel (204) and a port-side lateral panel (204) that extend vertically on either side of the upper spar (202) and two lateral scoops (230), each one being fastened on the outside against a lateral panel (204) and having a surface for contact with the upper spar (202),
- a wing (104) having a skin (210), a front spar (208) extending on the inside of the skin (210), a starboard-side front bracket (212a), a port-side front bracket (212b), wherein each front bracket (212a-b) has a front recess (218), wherein, for each front recess (218), the associated front bracket (212) has an open bore (224) passing through it that opens into said recess (218), wherein the front spar (208) has a front pleat (208a), an intermediate pleat (208b) and a rear pleat (208c), wherein the front pleat (208a) has a proximal end as one with a lower edge of the intermediate pleat (208b) and a distal end that extends forwards relative to the proximal end, and wherein the rear pleat (208c) has a proximal end as one with an upper edge of the intermediate pleat (208b) and a distal end that extends rearwards relative to the proximal end,
wherein each front bracket (212a-b) is positioned in front of the intermediate pleat (208b) against the front pleat (208a) and the intermediate pleat (208b), and
wherein each front bracket (212a-b) is fastened to said intermediate pleat (208b),
wherein, for each front recess (218), each one of the front pleat (208a), the skin (210), the upper spar (202) and the associated lateral scoop (230) has a bore passing through it that is coaxial with the open bore (224) corresponding to the front recess (218),
**characterized in that** the wing (104) also comprises a starboard-side rear bracket (214a) and a port-side rear bracket (214b), wherein each rear bracket (214a-b) has a rear recess (220), and wherein each rear bracket (214a-b) is positioned behind the intermediate pleat (208b) against the intermediate pleat (208b) and the skin (210), and wherein each rear bracket (214a-b) is fastened to said intermediate pleat (208b),
wherein, for each rear recess (220), the associated rear bracket (214) has an open bore (224) passing through it that opens into said recess (220),
wherein, for each rear recess (220), each one of the skin (210), the upper spar (202) and the associated lateral scoop (230) has a bore passing through it that is coaxial with the open bore (224) corresponding to the rear recess (220), and
wherein, for each of the front and rear recesses (218, 220), the assembly (200) also has a fastening bolt having a nut (222) housed in said recess (218, 220), and a screw (226) of which the threaded shank passes through the coaxial bores and the open bore (224) and is screwed into the nut (222), and of which the head bears against the lateral scoop (230).

2. Assembly (200) according to Claim 1, **characterized in that** the wing (104) has an interposed part (228) that is positioned between the skin (210) and the upper spar (202) and **in that** the interposed part (228) is fastened to the skin (210), to the front pleat (208a) and to each front bracket (212a-b) by putting in place clamping bolts (232) .

3. Assembly (200) according to Claim 2, **characterized in that**, at each front bracket (212a-b), the assembly (200) is equipped with a shear pin (234) that takes the form of a cylinder in which is fitted the threaded shank of the fastening bolt corresponding to said front bracket (212a-b) and that extends through a bore (402) in the lateral scoop (230) and a bore in the interposed part (228) by passing through a bore in the upper spar (202).

4. Assembly (200) according to one of Claims 1 to 3, **characterized in that**, for each open bore (224) in a starboard-side bracket (212a, 214a), the starboard-side lateral panel (204) has a stiffener (236) and, for each open bore (224) in a port-side bracket (212b, 214b), the port-side lateral panel (204) has a stiffener (236), **in that** each lateral panel (204) has a mid-plane (406), **in that** each stiffener (236) has a mid-plane (P), **in that** the intersection between the mid-plane (406) of each lateral panel (204) and the mid-plane (P) of each associated stiffener (236) is a straight line (406), **in that** the surface for contact between the upper spar (202) and the lateral scoop (230) intersects the axis (408) of each open bore (224) at a point of intersection (410), and **in that** each point of intersection (410) belongs to the straight line (406) corresponding to said open bore (224) .

5. Aircraft (100) having at least one assembly according to one of Claims 1 to 4.
